# FASCICULE DE BREVET EUROPEEN

(11) **EP 3 689 608 B1**
(45) Date de publication et mention de la délivrance du brevet: **27.10.2021**
(21) Numéro de dépôt: 20155265.0
(22) Date de dépôt: 04.02.2020
(51) Int. Cl.: B33Y 10/00, A61C 13/00, A61C 13/087, A61C 13/09

(54) **PROCÉDÉ DE FABRICATION D'UN ÉLÉMENT DENTAIRE ET DISPOSITIF DE FABRICATION D'UN ÉLÉMENT DENTAIRE**
HERSTELLLUNGSVERFAHREN EINES ZAHNELEMENTS UND HERSTELLUNGSVORRICHTUNG EINES ZAHNELEMENTS
METHOD FOR MANUFACTURING A DENTAL ELEMENT AND DEVICE FOR MANUFACTURING A DENTAL ELEMENT

(30) Priorité: 04.02.2019 FR 1901083
(43) Date de publication de la demande: 05.08.2020
(73) Titulaire: Maneuf, Bernard, 38500 Voiron (FR); Clunet-Coste, Bruno, 38960 Saint-Etienne-de-Crossey (FR); Collombin, André, 38500 Voiron (FR); Richert, Raphaël, 69007 Lyon (FR)
(72) Inventeur: Maneuf, Bernard, 38500 Voiron (FR); Clunet-Coste, Bruno, 38960 Saint-Etienne-de-Crossey (FR); Collombin, André, 38500 Voiron (FR); Richert, Raphaël, 69007 Lyon (FR)
(74) Mandataire: Talbot, Alexandre

(56) Documents cités:
- WO-A1-2018/087383
- US-A1- 2010 233 655
- US-A1- 2017 360 534

## Description

### Domaine technique

L'invention concerne les procédés de fabrications des éléments dentaires et par exemple, les renforts dentaires et les éléments prothétiques dentaires. L'invention concerne également un robot de fabrication d'un tel élément dentaire.

### Technique antérieure

Lors de l'installation d'un dispositif prothétique dentaire, il est courant de prendre une empreinte de l'élément à remplacer ou de la zone sur laquelle le dispositif prothétique doit être installé afin que le dispositif prothétique dentaire s'adapte à la configuration géométrique du patient. Par exemple, il est courant de prendre une empreinte des dents d'un patient afin de pouvoir conformer la prothèse pour qu'elle s'adapte à la disposition des dents immédiatement adjacentes et pour s'assurer que les efforts appliqués soient sensiblement identiques à ceux des autres dents.

Il est également connu de former la prothèse dans un matériau ou dans un ensemble de matériaux particuliers de manière à pouvoir supporter les contraintes classiques attendues, par exemple la dent est formée dans un matériau assurant les efforts de mastication. Cependant, selon la position de la dent, la configuration de la mâchoire et d'autres paramètres représentatifs de l'individu, l'orientation, l'intensité et la récurrence des contraintes fonctionnelles auxquelles la pièce prothétique est soumise sont différentes d'un utilisateur à l'autre. Les éléments prothétiques actuels ne s'adaptent pas à ces différences de fonctionnement et sont configurés pour supporter un jeu de contraintes prédéfini représentatif d'une utilisation conventionnelle.

Ainsi, pour une meilleure acceptation de la prothèse, il convient d'adapter ses performances mécaniques au même titre que ses dimensions aux besoins de l'utilisateur. De manière évidente, il apparaît que l'utilisation d'un renfort standardisé universel ne peut pas répondre aux besoins spécifiques de chaque utilisateur car les contraintes dimensionnelles et mécaniques sont par définition uniques.

Pour former une prothèse sur mesure, il est connu de partir d'un élément massif et d'usiner cet élément pour aboutir à la forme tridimensionnelle recherchée. Cette méthode ne permet pas de former une prothèse ayant les caractéristiques mécaniques adaptées au besoin de l'utilisateur. Seule la forme finale de la prothèse est adaptée aux besoins de l'utilisateur.

Il ressort que lorsque l'élément massif initial est formé dans un seul matériau, les caractéristiques mécaniques sont souvent isotropes et l'adaptation de la prothèse dans sa forme ne permet pas d'adapter les performances mécaniques.

Il ressort également que lorsque l'élément massif initial est formé par une matrice renforcée par une ou plusieurs fibres, l'usinage de l'élément massif vient sectionner les fibres ce qui a pour effet de compromettre la résistance mécanique de la prothèse et son aptitude au polissage avant son installation. Ce problème est présent que la matrice soit renforcée par des fibres longues ou des fibres courtes. En conclusion, l'usinage d'un élément massif initial ne permet pas de former une prothèse qui soit en mesure de s'adapter aux contraintes mécaniques de son utilisation.

Il est également connu d'utiliser un renfort qui comporte une matrice souple associée à des fibres. Le renfort est déformable ce qui permet d'adapter sa forme à la zone sur laquelle la prothèse doit être montée. Une fois le renfort installé, ce dernier est polymérisé, par exemple photopolymérisé pour former un renfort beaucoup plus résistance mécaniquement. De manière conventionnelle, le renfort est mis en forme sur un modèle de laboratoire avant d'être installé sur le patient. Cette approche est avantageuse car le renfort peut utiliser des réseaux de fibres, des fibres tressées ou des fibres unidirectionnelles ce qui permet d'utiliser un renfort dont les propriétés mécaniques sont mieux adaptées au besoin. Cependant, il apparaît que lors de la mise en forme du renfort, les fibres sont déformées ce qui modifie le comportement mécanique du renfort. Il est alors impossible d'adapter spécifiquement les performances mécaniques du renfort aux besoins de l'utilisateur. Comme pour la solution précédente, il est avantageux d'avoir un renfort très résistant pour éviter sa détérioration.

Dans les laboratoires dentaires, il est connu d'utiliser un support en résine acrylique qui a été conformé à la forme recherchée pour la prothèse. Le support est usiné pour définir une pluralité de rainures. Des fibres de renfort sont installées à l'intérieur de ces rainures. Cette solution permet d'adapter partiellement la forme et les performances mécaniques à celles recherchées pour la prothèse. Il ressort cependant que cette configuration ne permet de former qu'un renfort temporaire dont le fonctionnement est acceptable sur une période de temps courte. Ce renfort n'est pas en mesure de former une prothèse dont la configuration géométrique et les performances mécaniques tridimensionnelles sont adaptées aux besoins particuliers du contexte musculo-squelettique de l'utilisateur. Le document US 2017/360534 A1 divulgue un procédé de réalisation d'un dentier comportant la formation successive de couches de différentes résines avant polymérisation de l'ensemble.

### Objet de l'invention

Un objet de l'invention consiste à pallier ces inconvénients, et plus particulièrement à fournir un procédé de fabrication d'un élément dentaire dont la forme et les performances mécaniques sont mieux maitrisées tout en étant facile à mettre en oeuvre. Selon un aspect de l'invention, il est proposé un procédé de réalisation d'un élément dentaire comportant les étapes successives suivantes :
- fournir un ensemble de données représentatif de l'élément dentaire à réaliser, l'ensemble de données définissant des caractéristiques dimensionnelles et mécaniques de l'élément dentaire,
- former un premier motif réalisé dans une première résine par impression 3D au moyen de l'ensemble de données,
- déposer un premier jeu de fibres sur une surface sommitale du premier motif, le premier jeu de fibres comportant une pluralité de première fibres orientées selon un premier jeu de directions, le premier jeu de directions étant défini par l'ensemble de données, le premier jeu de fibres définissant un premier ensemble de trous traversants,
- former un deuxième motif réalisé dans une deuxième résine par impression 3D au moyen de l'ensemble de données, le deuxième motif remplissant au moins une partie du premier ensemble de trous traversants pour venir en contact de la surface du premier motif, le deuxième motif recouvrant au moins partiellement le premier ensemble de fibres,
- déposer un deuxième jeu de fibres sur une surface sommitale du deuxième motif, le deuxième jeu de fibres comportant une pluralité de deuxième fibres orientées selon un deuxième jeu de directions différent du premier jeu de directions, le deuxième jeu de directions étant défini au moyen de l'ensemble de données, le deuxième jeu de fibres définissant un deuxième ensemble de trous traversants,
- former un troisième motif réalisé dans une troisième résine par impression 3D au moyen de l'ensemble de données, le troisième motif remplissant au moins une partie du deuxième ensemble de trous traversants pour venir en contact de la surface du deuxième motif, le troisième motif recouvrant complètement le deuxième ensemble de fibres,
- polymériser le premier motif, le deuxième motif, le troisième motif et les premier et deuxième ensembles de fibres pour former l'élément dentaire.

Selon un développement, le premier jeu de fibres et/ou le deuxième jeu de fibres comportent au moins une fibre préimprégnée par une résine et dans lequel une étape de polymérisation est réalisée pour faire réagir la résine et fixer la fibre préimprégnée avec respectivement la paroi sommitale du premier motif et/ou du deuxième motif.

Préférentiellement, le premier jeu de fibres et/ou le deuxième jeu de fibres comportent au moins une fibre préimprégnée par une résine et une étape de polymérisation est réalisée pour définir une forme tridimensionnelle de la au moins une fibre préimprégnée faisant saillie de la surface sommitale du premier motif et/ou du deuxième motif d'une distance supérieure au diamètre de la au moins une fibre préimprégnée.

Dans un mode de réalisation particulier, l'étape de polymérisation est une polymérisation point par point pour figer la forme tridimensionnelle de la au moins une fibre préimprégnée au fur et à mesure que la au moins une fibre préimprégnée quitte un dispositif d'installation tridimensionnel de fibre.

Il est avantageux de prévoir que le premier et le deuxième jeux de fibres ne débouchent pas sur la paroi externe de l'élément dentaire.

Avantageusement, le procédé comporte réaliser une empreinte intra buccal pour obtenir un fichier numérique définissant au moins en partie les caractéristiques dimensionnelles de la prothèse dentaire et modéliser un cheminement des fibres du premier jeu de fibres pour définir au moins en partie des caractéristiques mécaniques de l'élément dentaire.

Un autre objet de l'invention consiste à fournit un robot pour la fabrication d'un élément dentaire dont la forme et les performances mécaniques sont mieux maitrisées. Le robot pouvant adapter les performances de l'élément dentaire aux besoins de l'utilisateur pour former un produit sur-mesure.

Selon un aspect de l'invention, il est proposé un robot pour la fabrication d'un élément dentaire comportant un circuit de commande relié à une tête d'impression tridimensionnelle et à un dispositif d'installation tridimensionnelle d'au moins une fibre.

Le robot est remarquable en ce que le circuit de commande est connectée à une zone mémoire comportant un ensemble de données représentatives de l'élément dentaire à réaliser, l'ensemble de données définissant des caractéristiques dimensionnelles et mécaniques de l'élément dentaire et en ce que le circuit de commande est configuré pour décomposer l'élément dentaire en une pluralité de motifs formés successivement par la tête d'impression tridimensionnelle, le circuit de commande déposant un jeu de fibres selon un agencement défini par l'ensemble de données entre deux motifs consécutifs

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1 illustre de manière schématique le dépôt d'un premier motif au moyen d'une tête d'imprimante tridimensionnelle pour un élément dentaire selon l'invention ;
- la figure 2 illustre de manière schématique le dépôt d'un premier jeu de fibres de renfort sur le premier motif pour un élément dentaire selon l'invention ;
- la figure 3 illustre de manière schématique le dépôt d'un deuxième motif au moyen d'une tête d'imprimante tridimensionnelle sur le premier jeu de fibres de renfort et le premier motif pour un élément dentaire selon l'invention ;
- la figure 4 illustre de manière schématique le dépôt d'un deuxième jeu de fibres de renfort sur le deuxième motif pour un élément dentaire selon l'invention ;
- la figure 5 illustre de manière schématique le dépôt d'un troisième motif au moyen d'une tête d'imprimante tridimensionnelle sur le deuxième jeu de fibres de renfort et le deuxième motif pour un élément dentaire selon l'invention ;
- la figure 6 illustre de manière schématique un renfort formé selon les étapes illustrées aux figures 1 à 5.

### Description des modes de réalisation

Afin de former un élément dentaire tel que par exemple une prothèse dentaire ou un renfort dentaire, un ensemble de données est fourni à un dispositif de fabrication. L'ensemble de données est représentatif de l'élément dentaire à réaliser par exemple la prothèse ou le renfort dentaire. Cet ensemble de données définit la forme tridimensionnelle de l'élément dentaire et ses caractéristiques mécaniques. En d'autres termes, l'ensemble de données définit les dimensions de l'élément dentaire selon trois axes orthogonaux ce qui permet de définir la forme des parois latérales ainsi que la forme de la paroi sommitale. L'élément dentaire est défini par une matrice renforcée par des fibres de renfort.

L'ensemble de données définit également le matériau de la matrice qui forme la prothèse ainsi que la position et les matériaux des fibres de renforts qui sont disposées dans la matrice. L'élément dentaire est formé par un matériau composite avec une matrice formée dans au moins une résine et une pluralité de fibre de renfort qui cheminent à l'intérieur de la matrice. Les différentes fibres de renforts sont disposées de manière tridimensionnelle pour que l'élément dentaire supporte un jeu de contraintes prédéfini. L'ensemble de données peut être stocké dans une mémoire à l'intérieur d'un ordinateur.

Les inventeurs ont observé que la nature et la localisation des contraintes diffèrent selon la zone étudiée d'un élément dentaire. Par exemple, la partie coronaire d'une dent prothétique n'est pas soumise au même jeu de contraintes que la partie radiculaire. Il en est sensiblement de même pour tous les éléments dentaires où le jeu de contraintes présent au cœur de l'élément dentaire est très différent des jeux de contraintes présent à ses deux extrémités opposées.

Afin que l'élément dentaire s'adapte de manière optimale à l'utilisateur, il est particulièrement intéressant d'adapter les performances mécaniques aux différentes portions d'un élément dentaire. Il ressort également que, selon les besoins, un type ou plusieurs types de renforts différents doivent être utilisés pour former l'élément dentaire. Les performances mécaniques de la matrice entrent également en jeu dans la localisation des renforts à l'intérieur de l'élément dentaire. Il est possible d'identifier différentes zones qui possèdent des performances mécaniques différentes. Ces zones possèdent toutes un matériau de matrice avec des fibres de renfort. La différenciation des performances mécaniques intervient dans la différenciation de la teneur volumique de fibres de renfort, par l'orientation des fibres de renfort et/ou par le matériau formant les fibres de renfort et/ou la matrice.

L'ensemble de données représentatif de l'élément dentaire définit la forme de l'élément dentaire c'est-à-dire ses différentes dimension, le cheminement des fibres de renfort dans l'élément dentaire. Le nombre et la position des fibres de renfort sont dépendants des performances mécaniques de la matrice, des performances mécaniques des fibres et des contraintes auxquelles l'élément dentaire sera soumis. L'ensemble de données définit le nombre et la position des fibres dans l'élément dentaire selon les contraintes à supporter.

L'ensemble de données représentatif de l'élément dentaire à réaliser peut être obtenu par tout moyen adapté. Néanmoins, il apparaît particulièrement avantageux de réaliser une prise d'empreinte intra-buccale au moyen d'une camera numérique. Cette méthode permet, au moyen d'un système optique, de générer un fichier de données numériques qui définit l'empreinte tridimensionnelle de l'environnement de l'élément dentaire. De cette manière, selon les configurations, une partie ou toute la forme de l'élément dentaire est calculée.

Le fichier de données numériques peut représenter les dents sur lesquelles le renfort dentaire sera installé. Le fichier de données numériques peut également représenter le vide à combler ou la dent qui sera remplacée par la prothèse dentaire. Le fichier de données numériques peut encore représenter une partie du palais sur lequel sera déposé le renfort dentaire. De manière générale, le fichier de données numériques peut représenter toute partie intra buccale amenée à coopérer avec l'élément dentaire ainsi que l'élément dentaire à remplacer.

Une fois la prise d'empreinte réalisée, les caractéristiques mécaniques de l'élément dentaire sont calculées. L'analyse d'un grand nombre de cas cliniques a permis d'identifier différentes catégories d'éléments, par exemple différentes catégories de renforts. Chaque catégorie de d'élément dentaire, par exemple un renfort dentaire, présente une configuration tridimensionnelle spécifique et une localisation spécifique des fibres de renfort dans la matrice.

L'identification de la catégorie de renfort est avantageusement réalisée en distinguant les adultes et les enfants. Il est également possible de distinguer les hommes et les femmes.

L'identification de la catégorie de l'élément dentaire est avantageusement réalisée en distinguant la position de l'élément dentaire dans la bouche, par exemple un renfort, et donc les dents avec lesquelles le renfort va coopérer. Le renfort sera différent selon qu'il coopère avec des molaires, des prémolaires, des canines ou des incisives.

L'identification de la catégorie du renfort est réalisée en tenant compte du type d'élément qui doit être effectué, par exemple en dissociant un élément de confort et un élément visant à réparer un traumatisme.

Toutes ces informations permettent d'ajuster la forme tridimensionnelle de l'élément dentaire et surtout les jeux de contraintes à supporter.

Un dispositif de calcul génère l'ensemble de données tridimensionnelles représentatif de l'élément dentaire à réaliser au moyen de la catégorie de renfort à utiliser et des dimensions du renfort à installer. Le dispositif de calcul génère l'ensemble de données tridimensionnelles avantageusement en tenant compte d'autres informations spécifiques comme les performances mécaniques de la résine utilisée pour former la matrice ainsi que des performances mécaniques des différentes fibres de renforts disponibles. Le dispositif de calcul peut être présent dans un ordinateur.

Pour générer l'ensemble de données tridimensionnelles, le dispositif de calcul peut également tenir compte de données additionnelles comme l'identification d'un bruxisme, l'âge de l'utilisateur ou la fragilité d'une dent adjacente.

L'ensemble de données tridimensionnelles définit les dimensions du renfort et le cheminement des différentes fibres de renfort à l'intérieur de l'élément dentaire pour adapter les performances mécaniques du renfort aux contraintes mécaniques de l'utilisateur ainsi qu'aux parois externes du renfort et afin de pouvoir s'intégrer au mieux à l'utilisateur.

De manière avantageuse, le dispositif de calcul est configuré de manière à éviter qu'une fibre de renfort débouche sur la surface externe de l'élément dentaire. En d'autres termes, les fibres de renfort sont toutes séparées de l'environnement extérieur par la matrice, c'est-à-dire par une couche de résine. Cette particularité permet d'éviter une fragilisation de l'élément dentaire lors de son installation. Dans les techniques traditionnelles, il est souvent nécessaire d'usiner légèrement la surface avant d'introduire l'élément dentaire dans un modèle de laboratoire ou sur un utilisateur. Il est courant d'avoir une fibre de renfort qui apparaît à la surface de l'élément dentaire et qui peut former une zone de fragilité dans le temps.

De manière avantageuse, le dispositif de calcul est configuré de manière à utiliser au moins une fibre de renfort sous la forme d'un fil torsadé (roving). Le fil torsadé possède des performances mécaniques élevées ce qui est particulièrement avantageux pour former un élément dentaire.

Préférentiellement, le dispositif de calcul est configuré pour diviser l'élément dentaire en une pluralité de motifs en résine qui sont superposés les uns aux autres. Le nombre de motifs à former et à superposer dépend de l'élément dentaire recherché et des fibres à introduire pour obtenir les performances mécaniques recherchées. Les motifs en résine sont formés successivement.

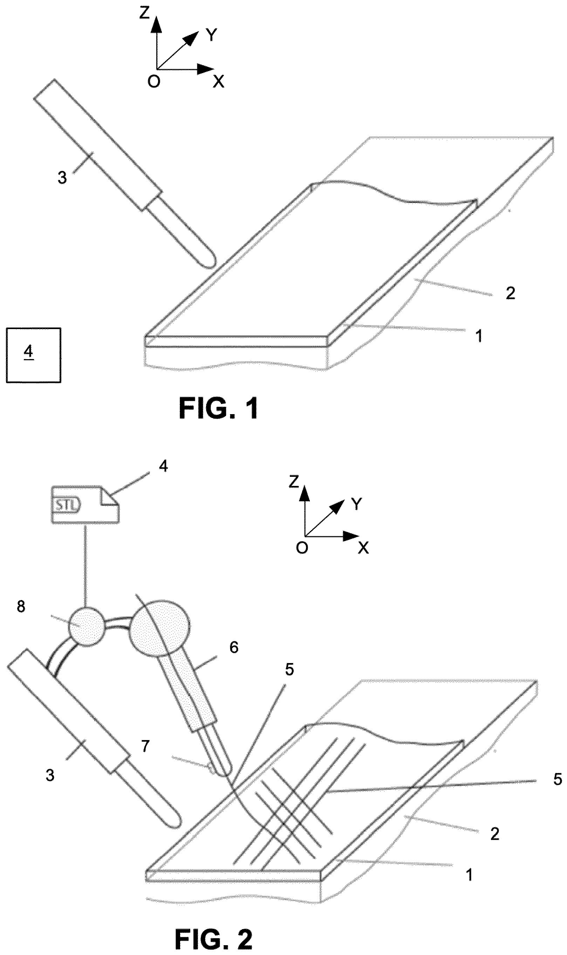

Comme illustré à la figure 1, une première couche de résine 1 est déposée sur un support 2. La première couche de résine 1 définit un premier motif tridimensionnel avec une forme et au moins un matériau. La première couche de résine 1 est déposée par une tête d'impression 3D 3 connecté au circuit de calcul 4 qui fournit l'ensemble de données. La surface sommitale de la première couche de résine peut être plane ou de forme quelconque. L'épaisseur de la première couche de résine 1 peut être constante sur toute la première couche ou variable afin de s'adapter aux besoins mécaniques de l'élément dentaire.

Comme illustré à la figure 2, les fibres de renfort 5 sont installées sous la forme d'un jeu de fibres de renfort sur la surface sommitale du premier motif 1.

Comme un autre motif sera formé par la suite, les fibres 5 sont disposées entre deux motifs 1 en résine adjacents. Les fibres de renfort 5 sont disposées selon une configuration précise imposée par le circuit de calcul 4 sur le premier motif 1. Les fibres 5 sont disposées sur les motifs au moyen d'un dispositif d'installation 6 de fibres 5. Le circuit de calcul 4 fournit au dispositif d'installation 6 les informations relatives au type de fibre à déposer ainsi qu'à la configuration tridimensionnelle à appliquer pour chaque fibre 5.

Le jeu de fibres de renfort 5 définit des ouvertures traversantes permettant au premier motif de venir en contact direct du deuxième motif. La première résine formant le premier motif vient en contact de la deuxième résine formant le deuxième motif ce qui facilite la connexion mécanique entre les deux motifs.

La surface supérieure ou sommitale de chaque motif 1 peut être plane ou texturée. La texturation de la surface supérieure d'un motif 1 est avantageusement choisie de manière à définir la position de l'ensemble de fibres 5. En d'autres termes, si l'ensemble de données tridimensionnelles prévoit qu'un jeu de fibres doit être disposé dans un même plan, il est particulièrement avantageux de terminer un motif 1 par ledit plan de manière à pouvoir déposer facilement les différentes fibres 5 selon la configuration recherchée. Selon la même logique, la face du motif 1 peut être texturée afin de présenter une texture qui reproduit l'orientation des différentes fibres de renfort 5 à déposer par la suite.

De manière avantageuse, les fibres de renfort 5 sont déposées individuellement sur le motif 1 de manière à pouvoir contrôler précisément la position et l'orientation de chaque fibre de renfort 5 dans l'élément dentaire.

Les fibres du jeu de fibres 5 peuvent définir une grille ou tout autre forme permettant d'atteindre les performances mécaniques recherchées. Comme les fibres 5 sont déposées individuellement, il n'y a pas déformation des nappes de fibres 5 lors de l'installation des fibres 5 comme dans l'art antérieur. Comme les fibres 5 sont déposées individuellement, l'élément dentaire est dépourvu d'un réseau de fibres tissées. Les fibres 5 peuvent installées rectilignes ou en zig-zag avec des formes adaptées au jeu de contraintes à supporter. Les fibres 5 sont avantageusement des fibres plates avec une épaisseur plus faible que leur largeur et leur longueur. Les fibres 5 peuvent être déposées au moyen d'un bec, par exemple un bec plat. Le bec peut être configuré pour déposer simultanément plusieurs fibres ce qui facilite l'obtention de fibres ayant un espacement constant entre elles quel que soit le mouvement du bec lors de la pose des fibres. Le bec peut être configuré pour former un tapis de fibres de renfort 5.

Le premier motif 1 est configuré pour adapter son épaisseur aux contraintes des couches inférieures pour que la couche sommitale soit la plus proche possible de ce qui est recherché pour l'orientation des fibres 5 du jeu de fibres à déposer. L'épaisseur des différents motifs 1 peut être identique ou sensiblement ou elle peuvent varier de manière importante selon les positions où doivent être déposées les fibres.

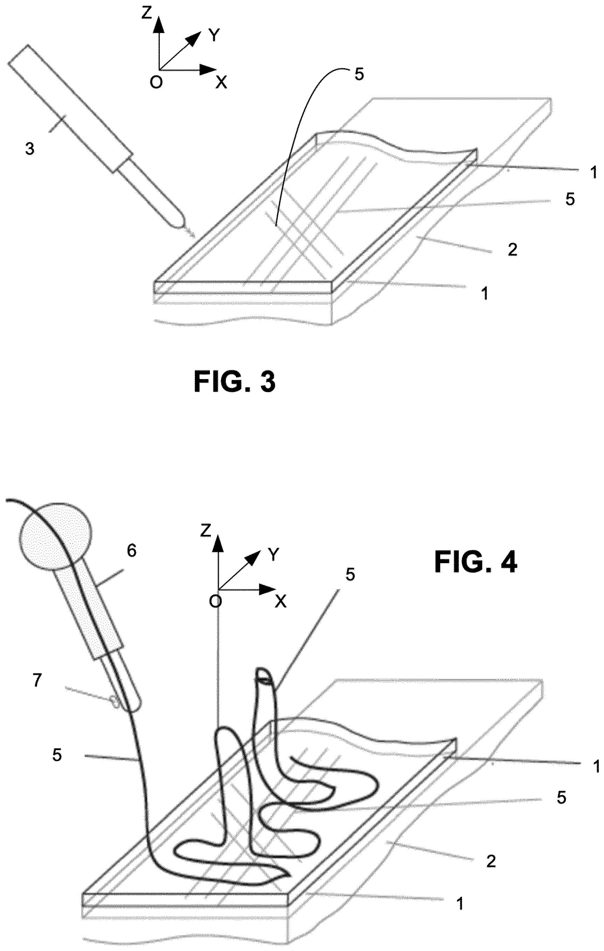

Comme illustré à la figure 3, un deuxième motif 1 est déposé sur le premier motif 1 et le premier jeu de fibres de renfort 5. Le deuxième motif 1 est déposé au moyen de la tête d'impression 3 qui reçoit les informations du circuit de calcul 4.

De manière avantageuse, le circuit de calcul 4 est configuré pour définir une fibre de renfort 5 qui traverse plusieurs motifs 1 consécutifs. En d'autres termes, si l'on considère que les motifs 1 sont empilés selon une direction Oz, le circuit de calcul 4 est configuré pour définir une fibre 5 qui s'étend majoritairement selon la direction Oz. Dans l'exemple illustré, la direction Oz est perpendiculaire au plan OxOy représentant la surface sommitale d'un motif 1. La fibre de renfort 5 passe à travers d'au moins un motif 1 déposé sur le motif inférieur qui supporte la fibre 5 en saillie. Le motif 1 est déposé autour de la fibre de renfort 5 qui peut s'étendre au-delà du motif 1 qui vient d'être formé. La fibre 5 est considérée en saillie lorsqu'elle s'étend de la surface sommitale du motif 1 d'une distance supérieure à son diamètre ou épaisseur.

Afin de pouvoir définir précisément la position de la fibre 5 dans les différentes directions, il est particulièrement avantageux de prévoir que la fibre de renfort 5 soit une fibre imprégnée d'une résine qui est avantageusement la même résine que celle formant la matrice 1 du renfort ou au moins le motif 1 qui supporte la fibre 5. La fibre 5 est installée au moyen d'une tête d'installation tridimensionnelle 6. La tête d'installation 6 se déplace et dépose une fibre 5 selon une direction définie par l'ensemble de données.

Avantageusement, au fur et à mesure que la fibre 5 est installée dans l'espace, cette dernière est soumise à une étape de polymérisation au moins partielle de manière à polymériser la résine qui l'entoure. La polymérisation de la résine est configurée soit pour faire réagir la résine de la fibre 5 avec la résine du motif 1 en contact et ainsi fixer la fibre 5 sur la surface du motif 1, soit former une enveloppe rigide autour de la fibre 5 pour pouvoir définir une forme tridimensionnelle pour la fibre 5 qui ne peut pas s'appuyer sur des motifs 1 qui seront formés plus tard. La figure 4 illustre une configuration où la fibre 5 est polymérisée pour faire saillie de la paroi sommitale d'un deuxième motif 1.

Après mise en forme de la fibre 5, un ou plusieurs nouveaux motifs 1 seront déposés qui entoureront la fibre 5 en saillie pour former au final un renfort monobloc et plein.

Pour former l'élément dentaire, le procédé décompose l'élément dentaire en une pluralité de motifs 1 qui sont déposés successivement les uns sur les autres. Un jeu de fibres de renfort 5 est déposé entre deux dépôts de motifs 1 successifs. Un motif 1 est déposé entre deux dépôts de fibres de renfort 5 successifs.

Les différents motifs 1 déposés successivement possèdent des formes dans les trois dimensions qui vont définir la forme finale du renfort. Les épaisseurs des motifs 1 sont avantageusement choisies de manière à définir les positions des fibres 5 dans un plan de séparation de deux motifs 1 consécutifs.

Dans un mode de réalisation particulier, les parois sommitales des motifs 1 sont planes de manière à former facilement des jeux de fibres 5 installées de manière planes entre deux motifs 1.

Une fois le premier motif 1 formé, un premier jeu de fibre de renfort 5 est déposé sur la paroi sommitale du premier motif 1 (figure 1). Dans un mode de réalisation particulier, les fibres 5 du premier jeu de fibres 5 sont déposées continument en contact avec la paroi sommitale du premier motif 1 de manière à ce que les fibres de renfort 5 soient disposées selon le plan sommital du premier motif 1.

La figure 1 illustre le dépôt d'un premier motif sur le support 2. Le premier motif 1 est déposé selon une première forme avec des premières dimensions transversales. Le premier motif 1 possède une paroi sommitale et une ou plusieurs parois latérales.

De manière avantageuse, la paroi sommitale est plane. Préférentiellement, l'épaisseur du premier motif 1 est constante. Dans une configuration préférentielle, la paroi sommitale du premier motif 1 comporte un ou plusieurs plots en saillie qui forment des bloqueurs pour les fibres de renfort 5. Les bloqueurs empêchent un déplacement des fibres de manière transversale lors de la formation du motif suivant. Les bloqueurs sont avantageusement formés par la tête d'impression 3D 3 lors de la formation du premier motif 1.

Dans une alternative de réalisation ou en complément, les fibres 5 sont recouvertes d'une résine. Les fibres 5 sont déposées sur la paroi sommitale du motif 1 et une étape de polymérisation est réalisée de manière à coller la fibre 5 sur la paroi sommitale. Il est alors possible de ne pas utiliser de plots en saillie.

Dans une première configuration, chaque fibre 5 est polymérisée après avoir été formée sur la paroi sommitale. Une fibre 5 est formée puis polymérisée avant de former la fibre suivante. Toutes les fibres 5 sont formées et fixées par polymérisation avant de déposer le motif suivant. Dans une autre configuration, toutes les fibres sont déposées sur la surface sommitale du motif 1 et une étape de polymérisation est réalisée sur l'ensemble des fibres 5 pour les fixer avant de déposer le motif 1 suivant. Il est également possible de former une partie des fibres selon la première configuration et une partie selon la seconde configuration. Il est également possible de former un premier jeu de motifs selon la première configuration puis un second jeu de motifs selon la seconde configuration dans un éléments de renfort comportant plusieurs motifs.

Dans un mode de réalisation avantageux, les fibres 5 sont déposées les unes après les autres ce qui permet de former un réseau de fibres 5 dont les différentes fibres 5 sont orientées selon un schéma particulier dans les trois dimensions. Il est possible de former des fibres 5 croisées selon une configuration spécifique ce qui permet de réaliser un motif avec des performances mécaniques spécifiques.

Dans une configuration particulière, les fibres 5 proviennent d'un réservoir à fibres 5. La fibre est formée à partir du réservoir qui fournit une longueur importante de fibre qui est disposée selon la configuration tridimensionnelle recherchée. La fibre est coupée à la dimension désirée par un coupeur 7 monté sur le dispositif d'installation 6.

Dans une autre configuration, le réservoir à fibres comporte plusieurs fibres distinctes. Les différentes fibres sont déposées selon la configuration tridimensionnelle et sont découpées à la dimension choisie. Les fibres sont prises les unes après les autres dans le réservoir à fibres pour être déposées selon la configuration tridimensionnelle recherchée puis coupées.

De manière avantageuse, le réservoir à fibres possède des fibres ayant des caractéristiques mécaniques différentes de manière à pouvoir adapter les caractéristiques de l'élément dentaire en utilisant des fibres mécaniquement différentes avec des configurations tridimensionnelles spécifiques.

Le réservoir à fibres de renfort peut comporter des fibres en matériau organique, par exemple des fibres à base de matériau acrylique, des fibres en viscose, des fibres en aramide ou des fibres en matériau phénolique. Il est également possible d'utiliser des fibres en PolyEtherEtherKetone ou PEEK. Il est également possible de prévoir que le réservoir à fibres de renfort comporte des fibres en fibres minérales siliceuses, des fibres en verre, des fibres en quartz, des fibres en silice.

Un jeu de fibres de renfort 5 comporte une pluralité de fibres de renfort 5 dont avantageusement au moins une des fibres est choisie parmi les matériaux listés ci-dessus.

Le matériau utilisé pour former les motifs est avantageusement choisi parmi les résines à base acrylique, les résines urethane dimethacrylate ou UDMA, les résines méthacrylate de bisphénol A-glycidyle ou BIS GMA, les résine Epoxy, les résines Polyester.

La fibre de renfort 5 peut être sous la forme d'une tresse avant sont dépôt.

Les motifs 1 sont formés à partir d'une tête d'impression 3 se déplaçant dans les trois dimensions afin de déposer de la résine et définir la forme des différents motifs 1. Au moyen des dépôts successifs des motifs 1, la tête d'impression 4 définit la forme globale de l'élément dentaire. La tête d'impression 3 est connectée à un réservoir à résine ce qui permet de déposer la résine recherchée à l'endroit choisi. Le réservoir à résine peut comporter une seule résine parmi les différentes résines précitées ou il peut comporter plusieurs sous-réservoir comportant chacun une résine.

La tête d'impression 3 est associée à un robot configuré pour déplacer la tête d'impression 3 dans les trois dimensions. Le robot est connecté au circuit de calcul 4 qui fournit l'ensemble de données tridimensionnelles représentatives de l'élément dentaire à réaliser.

Le circuit de calcul 4 fournit un premier jeu d'informations au robot pour former un premier motif 1 dans une première résine. Le premier motif 1 est défini par un premier ensemble de dimensions. De manière avantageuse, le premier motif 1 est plein. Le premier motif 1 est formé au moyen de la tête d'impression 3 qui dépose la première résine aux endroits désirés.

Le circuit de calcul 4 fournit ensuite un deuxième jeu d'informations au robot pour déposer les fibres de renfort 5 qui vont former le premier jeu de fibres de renfort 5. Le robot distribue les différentes fibres selon les coordonnées et séquences fournies par le circuit de calcul 4 et donc depuis l'ensemble de données tridimensionnelles représentatif de l'élément dentaire à réaliser.

Le robot peut également étirer les fibres de renfort 5 afin de les contraindre mécaniquement lors du dépôt. Une extrémité de la fibre est polymérisée sur le premier motif avant sa mise sous tension et l'extrémité est polymérisée alors que la fibre 5 est contrainte en tension.

Le robot peut également compacter les fibres de renfort 5. Le robot est configuré pour réaliser l'écrasement des fibres de renfort 5 après leur dépôt sur le premier motif 1 ou sur n'importe quel motif 1. Lors du dépôt des fibres 5, la tête d'impression est espacée de la surface du renfort par une distance prédéfinie. Cependant, cette distance prédéfinie peut être inférieure à l'épaisseur des fibres 5 de sorte que les fibres 5 vont gêner le dépôt optimal du matériau destiné à combler les espaces entre les fibres 5 et former le motif 1 à suivre. Il est donc particulièrement avantageux de compresser les fibres 5 de manière à réduire l'épaisseur des fibres 5 et former des motifs 1 mieux définis. La distance prédéfinie est avantageusement de l'ordre de un dixième de millimètre, la compression des fibres 5 permet d'utiliser des fibres 5 ayant une épaisseur supérieure à un dixième de millimètre puis de ramener cette épaisseur sous un dixième de millimètre pour former le motif 1.

Une fois les fibres de renfort 5 déposées et avantageusement fixées au premier motif 1, un deuxième motif 1 est déposé de manière à combler les espaces situés entre les fibres 5 pour éviter que les fibres 1 forment une partie de la paroi externe du renfort. Le deuxième motif 1 est déposé par un troisième jeu d'informations au robot.

De manière avantageuse, les fibres de renfort 5 sont déposées sur la surface sommitale d'un motif 1 sans atteindre la paroi latérale du motif 1 pour éviter que l'extrémité de la fibre de renfort 5 ne débouche sur la paroi externe de l'élément dentaire ce qui compromet sa capacité à être poli efficacement.

En alternative, les fibres de renfort 5 atteignent les parois latérales du motif 1 et le motif 1 suivant vient recouvrir les fibres 5 et former la paroi externe de l'élément dentaire.

Dans un mode de réalisation, la tête d'impression 3 formant les motifs est disposée sur la même extrémité du robot que le dispositif d'installation 6 des tiges de renfort 5. De cette manière, le même robot peut réaliser tout l'élément dentaire. Il est également avantageux de prévoir que l'extrémité du robot comporte un dispositif de polymérisation permettant de polymériser la résine formant un motif et éventuellement la résine recouvrant la fibre de renfort. Ainsi, le robot forme un motif et il peut polymériser la résine simultanément en sortie de la tête d'impression au fur et à mesure que le motif se forme. La tête d'impression 3 et le dispositif d'installation 6 sont avantageusement montés rotatif autour de la rotule 8 pour basculer rapidement de la tête d'impression 3 au dispositif d'installation 6. Il est particulièrement avantageux d'utiliser un même robot pour former les motifs et déposer les fibres de renfort car les décalages du robot s'appliquent de manière identique aux motifs et aux fibres ce qui facilite le réglage et donc le bon positionnement des fibres par rapport aux motifs.

La polymérisation est avantageusement partielle afin d'assurer une bonne tenue mécanique du motif 1 et faciliter la connexion mécanique des fibres 5 par la suite, lors d'une nouvelle polymérisation.

Dans un autre mode de réalisation, le robot comporte plusieurs têtes d'impression 3. Chaque tête d'impression 3 est associée à un matériau différent. Par exemple, une première tête est associée à une résine époxy, une deuxième tête est associée à une résine polyester et une troisième tête est associée à une résine à base de matériau acrylate. Un même robot est en mesure de déposer des motifs 1 dans des résines différentes.

Il est particulièrement avantageux d'utiliser des résines photopolymérisables avec un dispositif de polymérisation installé sur le robot et qui délivre un faisceau lumineux polymérisant les résines. Le dispositif de polymérisation peut être compact ce qui limite l'encombrement de l'extrémité du robot comportant la tête d'impression et le dispositif d'installation des fibres de renfort.

Les fibres de renfort 5 du réservoir de fibres peuvent être des fibres unidirectionnelles ou des fibres torsadées voire des fils tissés. De manière avantageuse, un fil torsadé est formé à partir d'une série de fils assemblés de manière parallèle tendus à une contrainte prédéfinie puis enroulés pour former le fil torsadé.

Le circuit de calcul 4 forme un élément dentaire monobloc comportant une matrice en résine renforcée par une pluralité de fibres de renfort 5. Les différentes fibres de renfort 5 sont disposées dans la matrice selon un schéma tridimensionnel prédéfini ce qui permet à l'élément dentaire de supporter un jeu de contraintes mécaniques prédéfini.

L'élément dentaire a été formé à partir d'un ensemble de données qui provient lui même d'une prise d'empreinte sur l'utilisateur ainsi que d'une étude mécanique prenant en compte le type de l'élément dentaire à former, la position de l'élément dentaire, l'âge de l'utilisateur, le sexe de l'utilisateur et d'autres données.

De cette manière, l'ensemble de données est représentatif d'un élément dentaire sur-mesure au besoin de l'utilisateur. L'élément dentaire est adapté aux besoins de l'utilisateur dans ses dimensions pour un bonne acceptation et surtout adapté mécaniquement afin de ne pas fragiliser l'environnement autour de l'élément dentaire.

De manière avantageuse, l'élément dentaire est recouvert par une couche de finition qui est formée par une résine polymérisable. La couche de finition est polymérisée et forme la paroi externe de l'élément dentaire. Préférentiellement, la couche de finition forme la paroi sommitale de l'élément dentaire et une partie des parois latérales. La couche de finition peut former le dernier motif 1 de l'élément dentaire ou au contraire la couche de finition est formée sur le dernier motif de l'élément dentaire. De manière avantageuse, le matériau formant le dernier motif 1 est un matériau plus résistant à l'usure que celui formant les autres motifs. Préférentiellement, le matériau formant le dernier motif 1 peut être teinté.

Une fois les différents motifs 1 formés, l'ensemble peut être soumis à une étape de polymérisation qui permet d'améliorer la tenue mécanique de l'élément dentaire.

Les figures 1 à 6 illustrent de manière schématique un mode de réalisation particulier d'un élément dentaire qui est avantageusement un renfort. Comme illustré à la figure 1, un premier motif 1 est formé sur un support par impression 3D à partir de l'ensemble de données et notamment en utilisant la tête d'impression 3D.

Comme illustré à la figure 2, un jeu de fibres 5 est déposé sur la paroi sommitale du premier motif 1 au moyen d'une tête d'installation 3D ce qui permet de déposer les multiples fibres 5 avec l'orientation définie par l'ensemble de données. Les fibres 5 du premier jeu de fibres n'atteignent pas les parois latérales du premier motif 1.

Comme illustré à la figure 3, un deuxième motif 1 est déposé sur le premier motif 1 pour recouvrir le premier jeu de fibres 5. Le premier jeu de fibres 5 est complètement encapsulé entre les deux motifs 1. Le deuxième motif 1 est déposé par impression 3D. Comme illustré à la figure 4, un deuxième jeu de fibres 5 est déposé sur le deuxième motif 1 avec au moins une fibre 5 qui est installée en saillie au moyen de la tête d'installation tridimensionnelle 6. La fibre 5 en saillie est imprégnée d'une résine qui est polymérisée afin de conserver la forme tridimensionnelle définie par la tête d'installation 6.

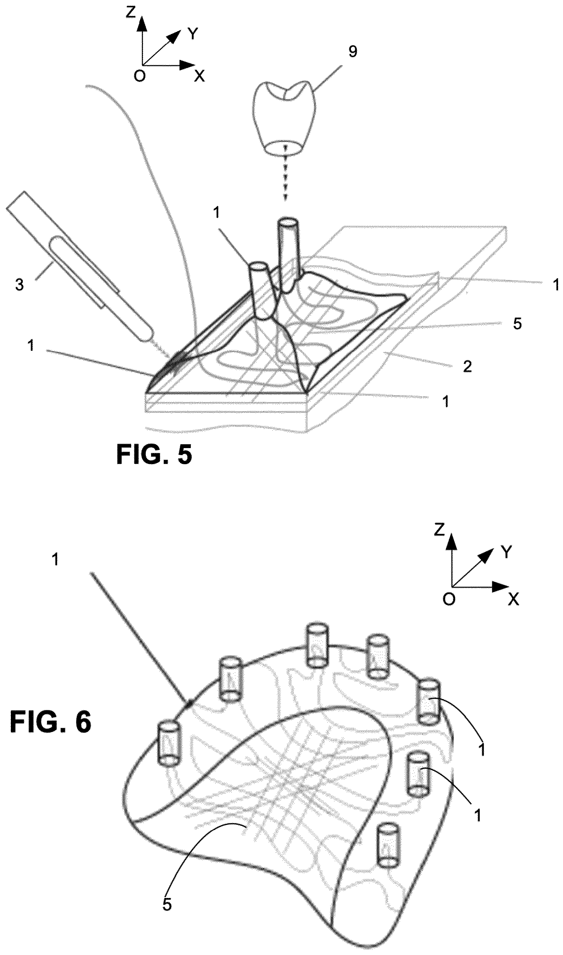

Comme illustré à la figure 5, un nouveau motif 1 est formé qui vient recouvrir le deuxième jeu de fibres 5 et définir l'élément dentaire. Dans l'exemple illustré, la fibre 5 en saillie est recouverte pour former un tenon d'installation d'une dent prothétique 9.

Une fois le dernier motif 1 formé, il est avantageux de réaliser une étape de polymérisation qui va faire réagir les différents motifs 1 entre eux et avec les fibres 5 pour augmenter la résistance mécanique de l'élément dentaire. Comme illustré à la figure 6, on peut observer que les différents motifs 1 peuvent posséder des formes différentes et que certaines fibres 5 sont spécifiques à un motif alors que d'autres fibres peuvent être partagées à plusieurs motifs 1.

La figure 6 illustre la réalisation d'un palais définissant plusieurs tenons pour l'installation de dents protéthiques.

Dans l'exemple de réalisation illustré, l'élément dentaire est formé par trois motifs et deux jeux de fibres. Il est possible de former un élément dentaire avec plus de motifs 1 et plus de jeux de fibres 5 en déposant des motifs 1 et des jeux de fibres 5 sous le premier motif 1. Les motifs 1 sont formés successivement et deux motifs 1 consécutifs sont séparés par un jeu de fibres 5. Les différents motifs 1 peuvent être réalisés comme le premier motif 1. Les différents jeux de fibres 5 peuvent être formés comme le premier jeux de fibres 5 ou comme le deuxième jeux de fibres 5.

Le procédé et l'élément dentaire sont avantageusement destinés à un modèle de laboratoire.

## Revendications

1. Procédé de réalisation d'un élément dentaire comportant les étapes successives suivantes :
- fournir un ensemble de données représentatif de l'élément dentaire à réaliser, l'ensemble de données définissant des caractéristiques dimensionnelles et mécaniques de l'élément dentaire,
- former un premier motif (1) réalisé dans une première résine par impression 3D au moyen de l'ensemble de données,
- déposer un premier jeu de fibres (5) sur une surface sommitale du premier motif (1), le premier jeu de fibres (5) comportant une pluralité de première fibres (5) orientées selon un premier jeu de directions, le premier jeu de directions étant défini par l'ensemble de données, le premier jeu de fibres (5) définissant un premier ensemble de trous traversants,
- former un deuxième motif (1) réalisé dans une deuxième résine par impression 3D au moyen de l'ensemble de données, le deuxième motif (1) remplissant au moins une partie du premier ensemble de trous traversants pour venir en contact de la surface sommitale du premier motif (1), le deuxième motif (1) recouvrant au moins partiellement le premier ensemble de fibres (5),
- déposer un deuxième jeu de fibres (5) sur une surface sommitale du deuxième motif (1), le deuxième jeu de fibres (5) comportant une pluralité de deuxième fibres (5) orientées selon un deuxième jeu de directions différent du premier jeu de directions, le deuxième jeu de directions étant défini au moyen de l'ensemble de données, le deuxième jeu de fibres (5) définissant un deuxième ensemble de trous traversants,
- former un troisième motif (1) réalisé dans une troisième résine par impression 3D au moyen de l'ensemble de données, le troisième motif (1) remplissant au moins une partie du deuxième ensemble de trous traversants pour venir en contact de la surface sommitale du deuxième motif (1), le troisième motif (1) recouvrant complètement le deuxième ensemble de fibres (5),
- polymériser le premier motif (1), le deuxième motif (1), le troisième motif (1) et les premier et deuxième ensembles de fibres (5) pour former l'élément dentaire.

2. Procédé selon la revendication 1, dans lequel le premier jeu de fibres (5) et/ou le deuxième jeu de fibres (5) comportent au moins une fibre préimprégnée par une résine et dans lequel une étape de polymérisation est réalisée pour faire réagir la résine et fixer la fibre préimprégnée avec respectivement la paroi sommitale du premier motif (1) et/ou du deuxième motif (1).

3. Procédé selon l'une quelconques des revendications précédentes dans lequel le premier jeu de fibres (5) et/ou le deuxième jeu de fibres (5) comportent au moins une fibre préimprégnée par une résine et dans lequel une étape de polymérisation est réalisée pour définir une forme tridimensionnelle de la au moins une fibre préimprégnée faisant saillie de la surface sommitale du premier motif (1) et/ou du deuxième motif (1) d'une distance supérieure au diamètre ou à l'épaisseur de la au moins une fibre préimprégnée.

4. Procédé selon la revendication précédente dans lequel l'étape de polymérisation est une polymérisation point par point pour figer la forme tridimensionnelle de la au moins une fibre préimprégnée au fur et à mesure que la au moins une fibre préimprégnée quitte un dispositif d'installation tridimensionnel (6) de fibre (5).

5. Procédé selon l'une quelconques des revendications précédentes dans lequel, le premier et le deuxième jeux de fibres (5) ne débouchent pas sur la paroi externe de l'élément dentaire.

6. Procédé selon l'une quelconques des revendications précédentes comportant réaliser une empreinte intra buccal pour obtenir un fichier numérique définissant au moins en partie les caractéristiques dimensionnelles de la l'élément dentaire et modéliser un cheminement des fibres (5) du premier jeu de fibres (5) pour définir au moins en partie des caractéristiques mécaniques de l'élément dentaire.

7. Robot pour la fabrication d'un élément dentaire comportant un circuit de calcul (4) relié à une tête d'impression tridimensionnelle (3) et à un dispositif d'installation tridimensionnelle (6) d'au moins une fibre (5), robot dans lequel
le circuit de calcul (4) est connecté à une zone mémoire comportant un ensemble de données représentatives de l'élément dentaire à réaliser, l'ensemble de données définissant des caractéristiques dimensionnelles et mécaniques de l'élément dentaire et dans lequel le circuit de calcul (4) est configuré pour décomposer l'élément dentaire en une pluralité de motifs (1) formés successivement par la tête d'impression tridimensionnelle (3), le dispositif d'installation tridimensionnelle (6) déposant un jeu de fibres (5) selon un agencement défini par l'ensemble de données entre deux motifs (1) consécutifs.

## Patentansprüche

1. Verfahren zur Herstellung eines Dentalelements, umfassend nacheinander die folgenden Schritte:
- Bereitstellen einer für das herzustellende Dentalelement repräsentativen Datengruppe,
wobei die Datengruppe dimensionale und mechanische Merkmale des Dentalelements definiert,
- Bilden eines ersten Motivs (1), das aus einem ersten Harz durch 3D-Druck mit Hilfe der Datengruppe hergestellt wird,
- Aufbringen einer ersten Fasereinheit (5) auf eine Oberfläche des ersten Motivs (1), wobei die erste Fasereinheit (5) eine Vielzahl von ersten Fasern (5) umfasst, die gemäß einer ersten Ausrichtungsgruppe ausgerichtet sind, wobei die erste Ausrichtungsgruppe durch die Datengruppe definiert ist, wobei die erste Fasereinheit (5) eine erste Gruppe von Durchgangslöchern definiert,
- Bilden eines zweiten Motivs (1), das aus einem zweiten Harz durch 3D-Druck mit Hilfe der Datengruppe hergestellt wird, wobei das zweite Motiv (1) mindestens einen Teil der ersten Gruppe von Durchgangslöchern füllt, um mit der Oberfläche des ersten Motivs (1) in Kontakt zu kommen, wobei das zweite Motiv (1) zumindest teilweise die erste Fasereinheit (5) abdeckt,
- Aufbringen einer zweiten Fasereinheit (5) auf eine Oberfläche des zweiten Motivs (1), wobei die zweite Fasereinheit (5) eine Vielzahl von zweiten Fasern (5) umfasst, die gemäß einer zweiten Ausrichtungsgruppe, die sich von der ersten Ausrichtungsgruppe unterscheidet, ausgerichtet sind, wobei die zweite Ausrichtungsgruppe durch die Datengruppe definiert ist, wobei die zweite Fasereinheit (5) eine zweite Gruppe von Durchgangslöchern definiert,
- Bilden eines dritten Motivs (1), das aus einem dritten Harz durch 3D-Druck mit Hilfe der Datengruppe hergestellt ist, wobei das dritte Motiv (1) mindestens einen Teil der zweiten Gruppe von Durchgangslöchern füllt, um mit der Oberfläche des zweiten Motivs (1) in Kontakt zu kommen, wobei das dritte Motiv (1) die zweite Fasereinheit (5) vollständig abdeckt,
- Polymerisieren des ersten Motivs (1), des zweiten Motivs (1), des dritten Motivs (1) und der ersten und zweiten Fasereinheiten (5), um das Dentalelement zu bilden.

2. Verfahren nach Anspruch 1, bei dem die erste Fasereinheit (5) und/oder die zweite Fasereinheit (5) mindestens eine mit einem Harz vorimprägnierte Faser umfassen, und bei dem ein Polymerisierungsschritt durchgeführt wird, um das Harz reagieren zu lassen und die vorimprägnierte Faser an der Oberfläche des ersten Motivs (1) und/oder des zweiten Motivs (1) zu fixieren.

3. Verfahren nach einem der vorhergehenden Ansprüche, bei dem die erste Fasereinheit (5) und/oder die zweite Fasereinheit (5) mindestens eine mit einem Harz vorimprägnierte Faser umfassen, und bei dem ein Polymerisierungsschritt durchgeführt wird, um eine dreidimensionale Form der mindestens einen vorimprägnierten Faser zu definieren, die aus der Oberfläche des ersten Motivs (1) und/oder des zweiten Motivs (1) über eine Distanz größer als der Durchmesser oder die Dicke der mindestens einen vorimprägnierten Faser herausragt.

4. Verfahren nach dem vorhergehenden Anspruch, bei dem der Polymerisierungsschritt eine Punkt-Polymerisierung ist, um die dreidimensionale Form der mindestens einen vorimprägnierten Faser im Zuge des Verlassens der mindestens einen vorimprägnierten Faser einer Vorrichtung zur dreidimensionalen Einrichtung (6) einer Faser (5) erstarren zu lassen.

5. Verfahren nach einem der vorhergehenden Ansprüche, bei dem die erste und die zweite Fasereinheit (5) nicht an der Außenwand des Dentalelements münden.

6. Verfahren nach einem der vorhergehenden Ansprüche, umfassend die Herstellung eines intraoralen Abdrucks, um eine digitale Datei zu erhalten, die zumindest teilweise die Dimensionsmerkmale des Dentalelements definiert, und die Modellierung eines Verlaufs der Fasern (5) der ersten Fasereinheit (5), um zumindest teilweise mechanische Merkmale des Dentalelements zu definieren.

7. Roboter für die Herstellung eines Dentalelements, umfassend eine Berechnungsschaltung (4), die mit einem dreidimensionalen Druckkopf (3) und einer Vorrichtung zur dreidimensionalen Einrichtung (6) mindestens einer Faser (5) verbunden ist, wobei bei dem Roboter die Berechnungsschaltung (4) mit einer Speicherzone verbunden ist, umfassend eine für das herzustellende Dentalelement repräsentative Datengruppe, wobei die Datengruppe dimensionale und mechanische Merkmale des Dentalelements definiert, und bei dem die Berechnungsschaltung (4) eingerichtet ist, um das Dentalelement in eine Vielzahl von Motiven (1) zu zerlegen, die nacheinander von dem dreidimensionalen Druckkopf (3) gebildet werden, wobei die Vorrichtung zur dreidimensionalen Einrichtung (6) eine Fasereinheit (5) gemäß einer durch die Datengruppe zwischen zwei aufeinanderfolgenden Motiven (1) definierten Anordnung aufbringt.

## Claims

1. Method for fabricating a dental part comprising the following successive steps:
- providing a data set representative of the dental part to be fabricated, the data set defining dimensional and mechanical characteristics of the dental part,
- forming a first pattern (1) made from a first resin by 3D printing by means of the data set,
- depositing a first set of fibres (5) on a top surface of the first pattern (1), the first set of fibres (5) comprising a plurality of first fibres (5) oriented in a first set of directions, the first set of directions being defined by the data set, the first set of fibres (5) defining a first set of through holes,
- forming a second pattern (1) made from a second resin by 3D printing by means of the data set, the second pattern (1) filling at least a part of the first set of through holes to come into contact with the top surface of the first pattern (1), the second pattern (1) at least partially covering the first set of fibres (5),
- depositing a second set of fibres (5) on a top surface of the second pattern (1), the second set of fibres (5) comprising a plurality of second fibres (5) oriented in a second set of directions different from the first set of directions, the second set of directions being defined by means of the data set, the second set of fibres (5) defining a second set of through holes,
- forming a third pattern (1) made from a third resin by 3D printing by means of the data set, the third pattern (1) filling at least a part of the second set of through holes to come into contact with the top surface of the second pattern (1), the third pattern (1) completely covering the second set of fibres (5),
- polymerizing the first pattern (1), second pattern (1), third pattern (1) and first and second sets of fibres (5) to form the dental part.

2. Method according to claim 1, wherein the first set of fibres (5) and/or second set of fibres (5) comprise at least one fibre pre-impregnated by a resin and wherein a polymerization step is performed to make the resin react and fix the pre-impregnated resin respectively with the top wall of the first pattern (1) and/or of the second pattern (1).

3. Method according to either one of the foregoing claims, wherein the first set of fibres (5) and/or the second set of fibres (5) comprise at least one fibre pre-impregnated by a resin and wherein a polymerization step is performed to define a three-dimensional shape of the at least one pre-impregnated fibre salient from the top surface of the first pattern (1) and/or of the second pattern (1) by a larger distance than the diameter or the thickness of the at least one pre-impregnated fibre.

4. Method according to the foregoing claim, wherein the polymerization step is point-by-point polymerization to fix the three-dimensional shape of the at least one pre-impregnated fibre progressively as the at least one pre-impregnated fibre leaves a three-dimensional installation device (6) of fibre (5).

5. Method according to any one of the foregoing claims, wherein the first and second sets of fibres (5) do not overrun onto the outer wall of the dental part.

6. Method according to any one of the foregoing claims comprising taking an intraoral imprint to obtain a digital file at least partially defining the dimensional characteristics of the dental part and to model a progression path of the fibres (5) of the first set of fibres (5) to at least partially define the mechanical characteristics of the dental part.

7. Robot for fabrication of a dental part comprising a computing circuit (4) connected to a three-dimensional print head (3) and to a three-dimensional installation device (6) of at least one fibre (5), robot wherein
- the computing circuit (4) is connected to a memory area comprising a data set representative of the dental part to be fabricated, the data set defining dimensional and mechanical characteristics of the dental part and wherein the computing circuit (4) is configured to break the dental part down into a plurality of patterns (1) successively formed by the three-dimensional print head (3), the three-dimensional installation device (6) depositing a set of fibres (5) with an arrangement defined by the data set between two consecutive patterns (1).
